## Europäisches Patentamt

## European Patent Office

## Office européen des brevets

(19)

(11) Veröffentlichungsnummer: **0 140 215 B1**

(12) **EUROPÄISCHE PATENTSCHRIFT**

(45) Veröffentlichungstag der Patentschrift:
**01.06.88**

(51) Int. Cl.⁴: **G 11 B 7/095**, G 02 B 7/18

(21) Anmeldenummer: **84111991.0**

(22) Anmeldetag: **06.10.84**

(54) **Spurfolgesystem zur Korrektur von Tangentenfehlwinkeln bei optischer Plattenabtastung.**

(30) Priorität: **03.11.83 DE 3339736**

(43) Veröffentlichungstag der Anmeldung:
**08.05.85 Patentblatt 85/19**

(45) Bekanntmachung des Hinweises auf die Patenterteilung:
**01.06.88 Patentblatt 88/22**

(84) Benannte Vertragsstaaten:
**BE DE FR GB NL**

(73) Patentinhaber: **Deutsche Thomson-Brandt GmbH, Hermann-Schwer-Strasse 3 Postfach 2060, D-7730 Villingen-Schwenningen (DE)**

(72) Erfinder: **Kühn, Hans, Haydnweg 9, D-7742 St. Georgen (DE)**

(56) Entgegenhaltungen:
**EP - A - 0 023 767**
**EP - A - 0 089 736**
**FR - A - 2 375 690**
**GB - A - 2 085 192**

**PATENTS ABSTRACTS OF JAPAN, Band 2, Nr. 23, 15. Februar 1978, Seite 11753 E 77; & JP - A - 52 145 006 (MITSUBISHI DENKI K.K.) 12.02.1977**

**Die Akte enthält technische Angaben, die nach dem Eingang der Anmeldung eingereicht wurden und die nicht in dieser Patentschrift enthalten sind.**

## Beschreibung

Stand der Technik

Die vorliegende Erfindung betrifft ein radial wirkendes Spurfolgesystem mit einem optischen Abtaster für ein Audio- oder Video-Plattenwiedergabegerät gemäss dem Oberbegriff des ersten Anspruchs.

Ein optisches Dreistrahl-Abtastsystem, auch 3-beam-optical-pickup genannt, ist aus der DE-PS 2 320 477 bekannt. Das für die radiale Nachsteuerung erforderliche Radial-Fehlersignal wird über zwei in tangentialer Richtung zur Spur angeordnete zusätzliche Lichtflecken (Hilfslichtflecken) erzeugt. Diese liegen in gleichem Abstand zum mittleren, dem Hauptlichtfleck und ihre Mittelpunkte befinden sich auf einer geraden Linie. Sie sind in radialer Richtung so zum Zentrum der Spur entgegengesetzt versetzt, dass bei einer radialen Abweichung der Spur relativ zu den Lichtflecken, entgegengesetzte Wirkungen in den beiden Hilfslichtflecken entstehen. Die reflektierten Lichtintensitäten der beiden Hilfslichtflecken werden getrennt von einander und getrennt von der reflektierten Lichtintensität des Hauptlichtfleckes über entsprechend zugeordnete Detektionsmittel ausgelesen.

Aus dem gleichen Patent ist es bekannt, die insgesamt drei Lichtflecken mit einem Phasenraster (Beugungsgitter) zu erzeugen, das zum Zwecke der einmaligen Justierung, wie es von auf dem Markt angebotenen Geräten bekannt ist, in einer zum Lichtstrahlbündel senkrechten Ebene um einen Drehpunkt, der nicht mit dem Mittelpunkt des Phasenrasters übereinstimmt, vielmehr ausserhalb des Phasenrasters liegt, um einen kleinen Winkel einstellbar ausgeführt ist. Eine erforderliche Drehung wird mechanisch über einen Hebel mittels einer von aussen am Gerät zugänglichen Stellschraube vorgenommen.

Die bisher bekannten optischen Abtaster nach dem Drei-Strahl-Prinzip weisen hinsichtlich ihrer Spurfehlerkorrektureigenschaft folgende Nachteile auf:

1. Sie lassen sich dort nicht verwenden, wo auf Grund des Konstruktionsprinzips nur eine radiale Steuerung mittels eines Schwenkarmes vorgenommen wird, da der hiermit verbundene Tangentenfehlwinkel in Abhängigkeit vom gerade abgetasteten Spur-Radius eine derartige Verschiebung der Lage der Hilfslichtflecken zur Spur zur Folge hat, dass eine Spurhaltung nicht zu erreichen ist.

2. Bei Radial-Linear-Systemen mit Grob- und Feinspurnachsteuerung ergibt sich die Schwierigkeit, dass bereits bei sehr geringen Abweichungen in der Führung der radialen Nachstellung auf Grund der unterschiedlichen Krümmung eine ungünstige radiale Verschiebung der beiden Hilfslichtflecken zur Spur eintritt. Hierdurch wird die Spurhaltung mangelhaft oder es kann Spurverlust eintreten.

Zur gemeinsamen radialen Nachsteuerung aller drei Lichtstrahlenbündel bzw. ihrer Lichtflecken ist es bekannt, bewegliche Spiegel oder bewegliche Linsensysteme einzusetzen.

Siehe dazu auch Funkschau 19/38, Seite 49.

Aus der «Philips technical review» 40/82, Seite 154 ist es weiterhin bekannt, zur Verbesserung der Nachführeigenschaften an das radiale Spur-Nachfolgesystem ein radial wirkendes Kontrollsignal zu legen, das z.B. bei einer Frequenz von 600 Hz ein radiales Hin- und Herschwingen der drei Lichtflecken mit einer Amplitude von 0,05 μm bewirkt. Die radiale Schwingbewegung des Abtasters führt zu einer Überlagerung der Lichtintensitäten auf den Detektionselementen. Durch entsprechende Summenbildung, Ausfiltern und Vergleich mit dem ursprünglichen Kontrollsignal kann auf eine evtl. vorliegende Asymmetrie des optischen Systems geschlossen und dadurch Fehler im Radial-Fehlersignal ermittelt und vermieden werden. Eine solche Einrichtung zeigt jedoch den Nachteil, dass das Kontrollsignal den abgetasteten Informationssignalen überlagert ist, d.h. im Frequenzspektrum des Informationsgehaltes liegt. Es ist deshalb auch nicht möglich, eine höhere Frequenz für das Kontrollsignal zu verwenden, da die Energieanteile der Informationssignale zunächst mit der Frequenz noch grösser werden. Es wäre aber durchaus wünschenswert eine erheblich höhere Frequenz als z.B. 500 oder 600 Hz zu verwenden, da erst dann ein genügender Abstand zum Frequenzspektrum der radialen Fehlersignale erreicht werden kann.

Aus der eingangs genannten DE-PS 2 320 477 ist gemäss Figur 5 und dazugehöriger Beschreibung (Spalten 5 und 6) auch bekannt, die Detektionselemente für die Hilfslichtflecken jeweils mit geteilter Fläche auszuführen. So ist es möglich die Intensitätsverteilung auf denselben zu erfassen und durch Differenzbildung Steuersignale zu erzeugen, die für die Lageregelung des oder der Spiegel verwendet wird (Spiegel 59 und 54).

Ausgehend von diesem Stand der Technik lag der Erfindung somit die Aufgabe zugrunde, eine Lösung zu finden, die eine unabhängige radiale Nachsteuerung der Auftrefforte der Hilfslichtflecken relativ zum Spurverlauf ermöglicht und dabei den Ort des Auftreffens des Hauptlichtflecks nicht beeinflusst. Ausserdem soll die gesuchte Lösung die Nachteile und Mängel bisheriger Lösungen vermeiden.

Die Lösung dieser Aufgabe erfolgt für ein System der im Oberbegriff des ersten Anspruchs genannten Art erfindungsgemäss durch die im kennzeichnenden Teil des Anspruchs angegebenen Merkmale.

Weitere Einzelheiten und Ausgestaltungen enthalten die übrigen Ansprüche sowie die nachfolgende Beschreibung von Ausführungsbeispielen.

Nach der Erfindung wird für ein radial wirkendes Spurfolgesystem ein ebener, dreigeteilter Reflexionsspiegel verwendet, der so ausgebildet ist, dass die beiden äusseren Teilspiegel jeweils eines der Strahlenbündel der Hilfslichtflecken reflektieren und der mittlere das des Hauptlichtflecks. Zumindest diese Teilspiegel, gegebenenfalls aber auch der mittlere, der der Reflektion des Strahlenbündels des Hauptlichtflecks dient, sind z.B. auf einer gemeinsamen Achse beweglich gelagert und stehen mit elektromechanischen Wandlern in Wirkverbindung. Somit sind zumindest die beiden äusseren Teilspiegel unabhängig voneinander, gleichgerichtet oder entgegengesetzt zueinander antreibbar und es kann dadurch der Winkel variiert werden, der gebildet wird aus der Verbindungslinie des Mittelpunktes des jeweiligen Hilfslichtfleckes mit dem Mittelpunkt des Hauptlichtflecks und der Tangente an der optimalen Spurabtaststelle des Hauptlichtfleckes.

Es ergeben sich bei dieser Ausführung drei wesentliche Vorteile:

1. Eine geringfügige Abweichung eines der Lichtflecken von seiner optimalen Position kann separat korrigiert werden, indem der entsprechende Wandler angesteuert wird.

2. Wenn mittels eines Kontrollsignals eine Auswertung der Detektionssignale zur Ermittlung einer optischen Unsymmetrie erfolgen und ausgeregelt werden soll, muss in einem der Kanäle der Hilfslichtflecken eine Verzögerung vorgenommen werden. Dies ist ebenfalls leicht durchführbar, indem die Wandler individuell angesteuert werden.

3. Falls eine ungleichmässige Intensitätsverteilung des Hauptlichtflecks durch irgendeine Ursache vorliegen sollte, würde bei Nachsteuerungen der Hilfslichtflecke um den Mittelpunkt des Hauptlichtfleckes eine Intensitätsverschiebung des Hauptlichtfleckes eintreten und dadurch die hiervor beeinflusste Fokussteuerung empfindlich gestört werden. Diese Störmöglichkeit entfällt, wenn das Phasenraster nur zur Erzeugung der drei Lichtflecken dient und die mittels der Wandler gesteuerten Teilspiegel ausschliesslich die Richtung der Verbindungslinie des jeweiligen Mittelpunktes des Hilfslichtfleckes relativ zur Tangente an der Abtaststelle beeinflussen und nicht den Hauptlichtfleck mit einer möglichen ungleichmässigen Intensitätsverteilung.

Nachfolgend wird die Erfindung anhand der Zeichnungen beschrieben. Es zeigen in

Figur 1 das Prinzip des schematischen Strahlengangs bei einem optischen Drei-Strahl-Abtaster mit Phasenraster nach dem Stand der Technik;

Figur 2 eine prinzipielle Darstellung der drei Lichtflecken bei einem derartigen Abtaster nach Figur 1;

Figur 3 eine ähnliche Darstellung wie Figur 2, wobei unterschiedliche Fehlwinkel $\alpha$ und $\beta$ für die radialen Abweichungen $D_1$ und $D_2$ der Hilfslichtflecken eingezeichnet sind;

Figur 4 eine prinzipielle Ausführung eines dreigeteilten Spiegels nach der Erfindung in einer Darstellung ähnlich der Figur 1;

Figur 5 ein erfindungsgemässes Ausführungsbeispiel eines dreigeteilten, einzeln steuerbaren Spiegels in perspektivischer Darstellung;

Figur 6 ein anderes erfindungsgemässes Ausführungsbeispiel eines dreigeteilten, einzeln steuerbaren Spiegels in perspektivischer Darstellung;

Figur 7 eine Reihe von graphischen Darstellungen zur Erklärung der Entstehung der Detektionssignale mit und ohne Fehlwinkel;

Figur 8 ein Blockschaltbild für die Auswertung der Detektionssignale und die Ermittlung des Steuersignals für den Antrieb des steuerbaren Spiegels, wenn ein Kontrollsignal verwendet wird;

Figur 9 ein vereinfachtes Blockschaltbild mit einem Festwertspeicher (ROM) vor dem Digital-Analog-Wandler als Zusatzeinrichtung der Steuerung von im voraus bekannten Winkelabweichungen der Hilfslichtflecken, z.B. beim Suchlauf;

Figur 10a ein Lagebild von Hilfslichtflecken und unterteilten Detektorelementen sowie

Figur 10b ein Blockschaltbild für die Auswertung der Detektionssignale und die Bildung von Steuersignalen für den Antrieb der einzelnen Teilspiegel, wenn kein Kontrollsignal angewendet wird.

Figur 11a, b, c drei typische, vereinfachte Lagedarstellungen der Lichtflecken an einem angedeuteten Spurstreifen, d.h. der radialen Begrenzung vom Pitfolgen einer Informationsspur.

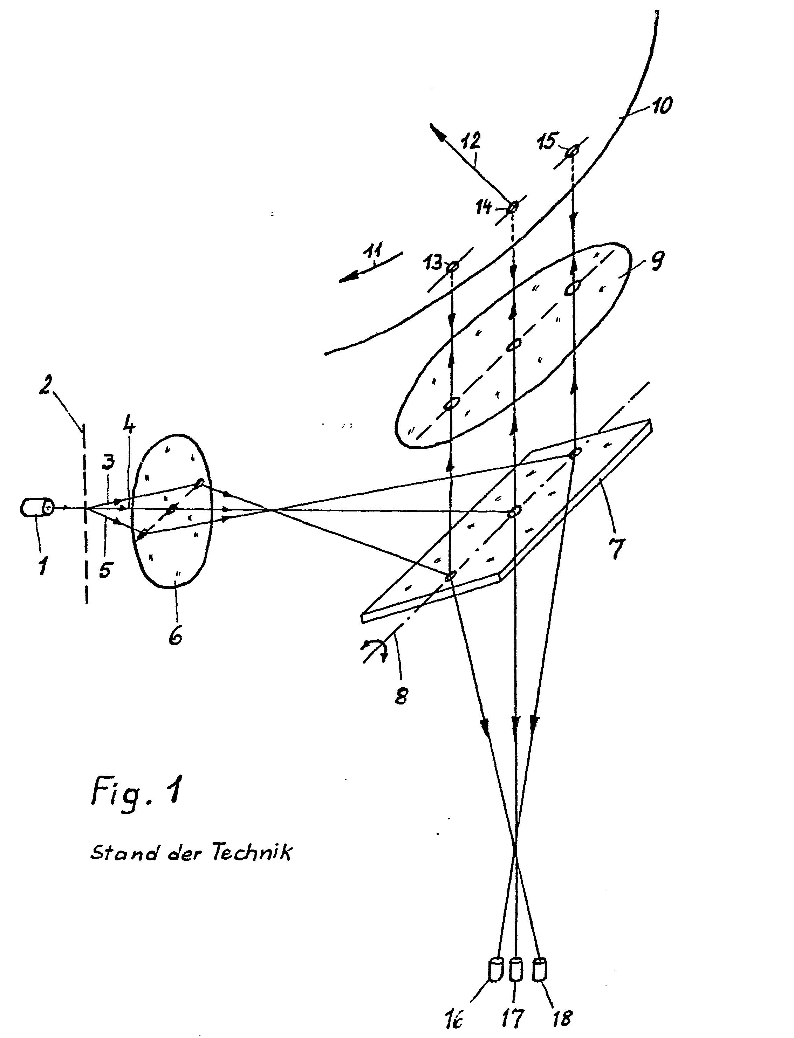

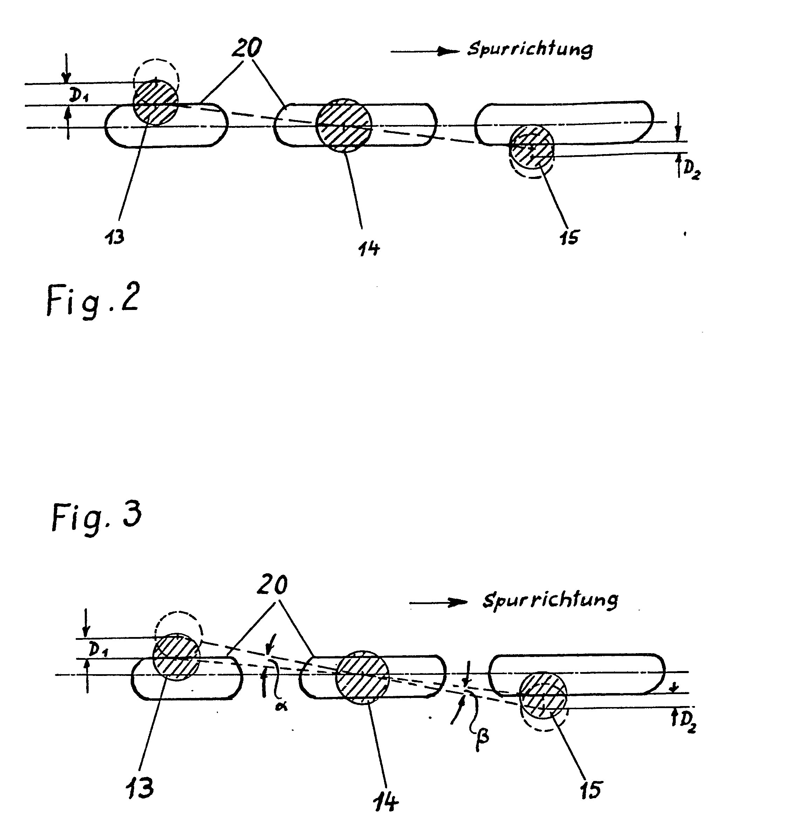

Ausgehend von dem eingangs gewürdigten Stand der Technik wird auf die Figuren 1 und 2 Bezug genommen. Das von einer Laser-Lichtquelle 1 ausgehende Lichtbündel gelangt auf ein Phasenraster 2, wo aufgrund von Beugungserscheinungen Lichtbündel höherer Ordnung entstehen, von denen die Lichtbündel der Ordnungen oberhalb der 1. Ordnung unterdrückt werden. Die drei Lichtbündel 3, 4 und 5, von denen jeweils nur ein Strahl gezeichnet wurde, gelangen nach Bündelung durch eine Optik 6 auf einen halbdurchlässigen Spiegel 7. Dieser ist zur Einstellung um seine Achse 8 kippbar. Die reflektierten Lichtbündel 3, 4, 5 werden von einem Objektiv 9 so auf der abzutastenden Platte 10 bzw. ihrer reflektierenden Schicht fokussiert, dass die Lichtflecken 13, 14 und 15 entstehen. Der Informationsauslesung- und Fokussteuerung dient der Hauptlichtfleck 14. Die Lichtflecken 13 und 15 sind Hilfslichtflecken und werden zur Korrektur von radialen Fehlabstungen benutzt. Die Platte 10 dreht sich in Pfeilrichtung 11 und die radiale Richtung zeigt der Pfeil 12 an. Die Reflektionen der Lichtflecken gelangen über das Objektiv 9 durch den Spiegel 7 zu den entsprechenden Detektoren 16, 17, 18. In Figur 2 ist ein Spurausschnitt einer Spur entlang der strichpunktierten Linie dargestellt. Die drei Lichtflecken 13, 14, 15 liegen mit ihren Mittelpunkten auf einer gestrichelten Linie, die nicht Tangente zur Spur ist. Die Hilfslichtflecken 13 und 15 treffen hier entgegengesetzt radial versetzt zur Spur auf. Ihre lichtreflektierten Flächenanteile, beaufschlagen die Detektorelemente 16 und 18 (Fig. 1). Der Hauptlichtfleck 14 befindet sich optimal auf der Spur und in Figur 2 auf dem mittleren der drei eingetragenen Pits. Durch die gestrichelt angedeutete, ungleiche Abweichung der Hilfslichtflecken würde, da ein radialer Fehler vorliegt und dabei der Hauptlichtfleck nicht mehr optimal auftrifft, die von den Detektionselementen 16 und 18 erfasste Lichtintensität ungleich sein wie es die unterschiedlichen Grössen $D_1$ und $D_2$ erkennen lassen. Hieraus kann dann ein Korrektursignal für den radialen Tangentenfehler ermittelt werden.

Figur 3 zeigt die ungleichen Fehlerwinkel $\alpha$ und $\beta$

entsprechend den ungleichen Grössen $D_1$ und $D_2$. In Figur 3 sind die Verhältnisse demnach bei unterschiedlicher Lage der Hilfslichtflecken 13 und 15 zum Hauptlichtfleck 14 und damit zur Tangente an der Spur am Ort des Hauptlichtflecks 14 dargestellt. Die entsprechenden Spiegelabschnitte müssen in diesem Fall unterschiedlich im Betrag und Phase angesteuert werden, um $D_1 = D_2 = 0$ zu erreichen

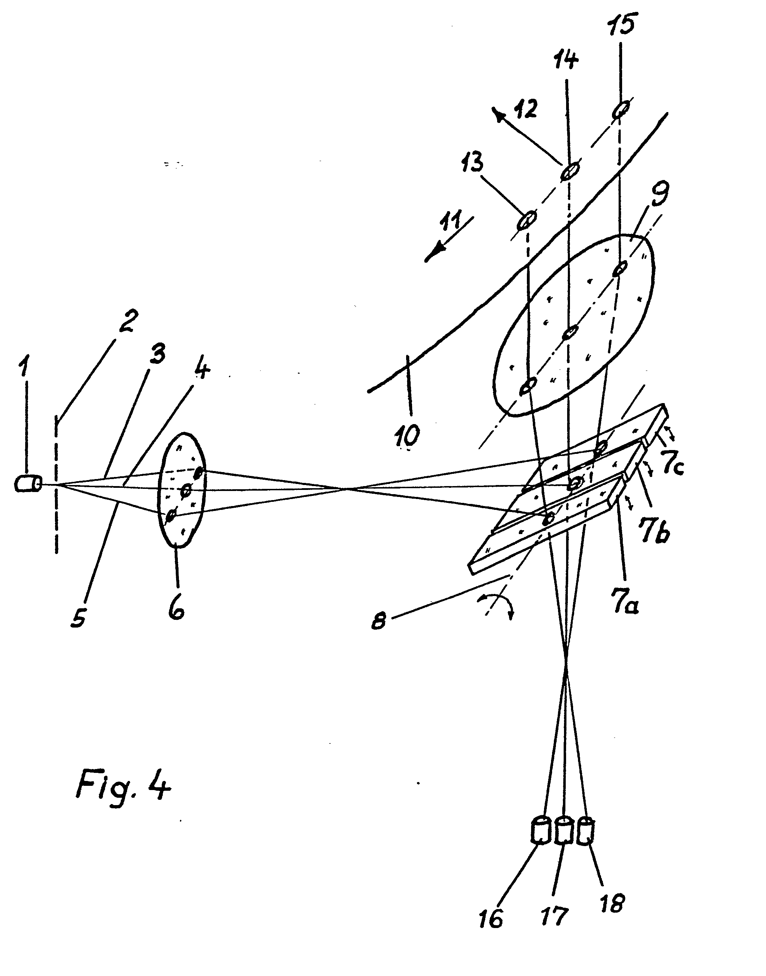

Gemäss der Erfindung ist der in Figur 4 dargestellte Spiegel in die Spiegelabschnitte 7a, 7b und 7c aufgeteilt, die nicht nur einzeln beweglich, sondern um die gemeinsame Achse 8 steuerbar sind. Dadurch ist es möglich den Auftreffort der Lichtflecken einzeln oder auch in gewünschter Kombination zur Korrektur eines Tangentenfehlers in radialer Richtung zu verändern. Die äusseren Spiegelabschnitte 7a und 7c übertragen die Lichtbündel der Hilfslichtflecken 13 und 15, der mittlere Spiegelabschnitt 7b das Lichtbündel des Hauptlichtflecks 14.

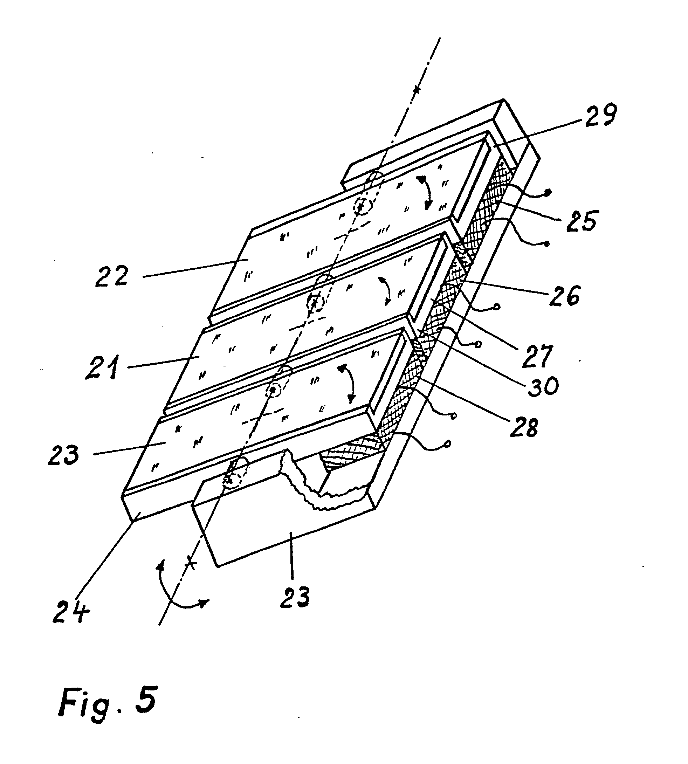

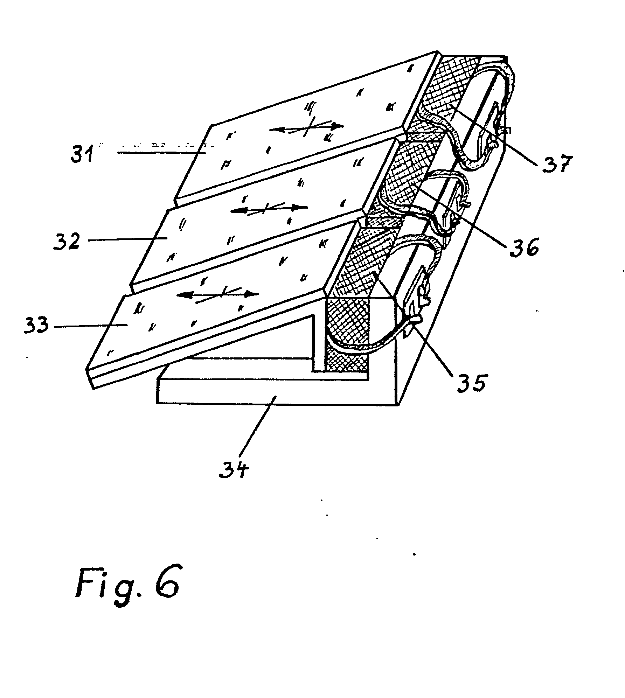

Statt einer Drehung der Spiegelabschnitte (Figur 5) um die Achse 8 ist auch eine Verschiebung aus einer Nullposition möglich, wie es bei der Besprechung der Figur 6 noch erläutert wird.

In den Figuren 1, 2, 3 und 4 wurden gleiche bzw. sich entsprechende Positionen mit denselben Nummern versehen.

Die Figuren 5 und 6 zeigen zwei verschiedene Ausführungsbeispiele von Spiegeln, deren Spiegelabschnitte von piezoelektrischen Wandlern angetrieben werden. Selbstverständlich ist es möglich, andere elektromechanische Wandler, beispielsweise elektromagnetische oder elektrostriktive, einzusetzen. Das in Figur 5 gezeigte Ausführungsbeispiel zeigt drei Spiegelabschnitte 21, 22, 23, die auf Tragkörpern 24, 27, 29 befestigt sind. Sie sind mittels der angedeuteten Achsstifte untereinander beweglich um die strichpunktiert eingezeichnete Achse im Rahmen 23 gelagert und können durch Ansteuerung der drei piezoelektrischen Wandler 25, 26, 28 unabhängig voneinander gekippt werden, wie die Pfeile auf den Spiegelabschnitten 21, 22, 23 andeuten.

In Figur 6 sind die Wandler 35, 36, 37 zwischen einem ortsfesten Rahmen 34 und den Spiegelabschnitten 31, 32, 33 so angeordnet, dass letztere bei entsprechender Ansteuerung der Wandler in Richtung der eingetragenen Pfeile verschoben werden können. Eine solche Verschiebung bedeutet ebenfalls eine radiale Auslenkung der Lichtflecken.

Wie erwähnt können die Antriebsmittel für die beiden äusseren Spiegelabschnitte mit einem überlagerten, entgegengesetzt gepolten Kontrollsignal von beispielsweise 10 kHz erregt werden und zwar derart, dass die beiden Hilfslichtflecke 13 und 15 mit einer radialen Abweichung von beispielsweise $D = 0,05 \mu m$ um ihren idealen «Ruhepunkt» auf der Spur schwingen.

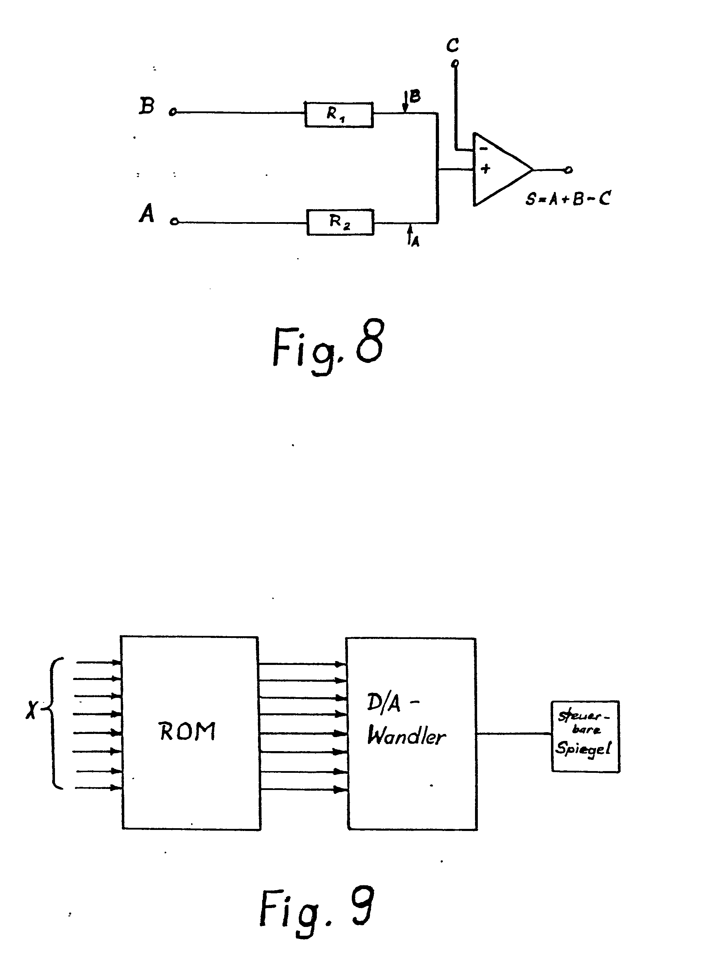

Das Blockschaltbild Figur 8 zeigt vereinfacht, wie die Detektionssignale A und B ausgewertet werden und daraus das Steuersignal S für den Antrieb der Wandler für die äusseren Spiegelabschnitte ermittelt wird. Am Minus-Eingang des Differenzverstärkers liegt ein Referenzsignal $C = A_0 + B_0$. Für Figur 8 wird die Anwendung eines Kontrollsignals in der zuvor erwähnten Art vorgenommen.

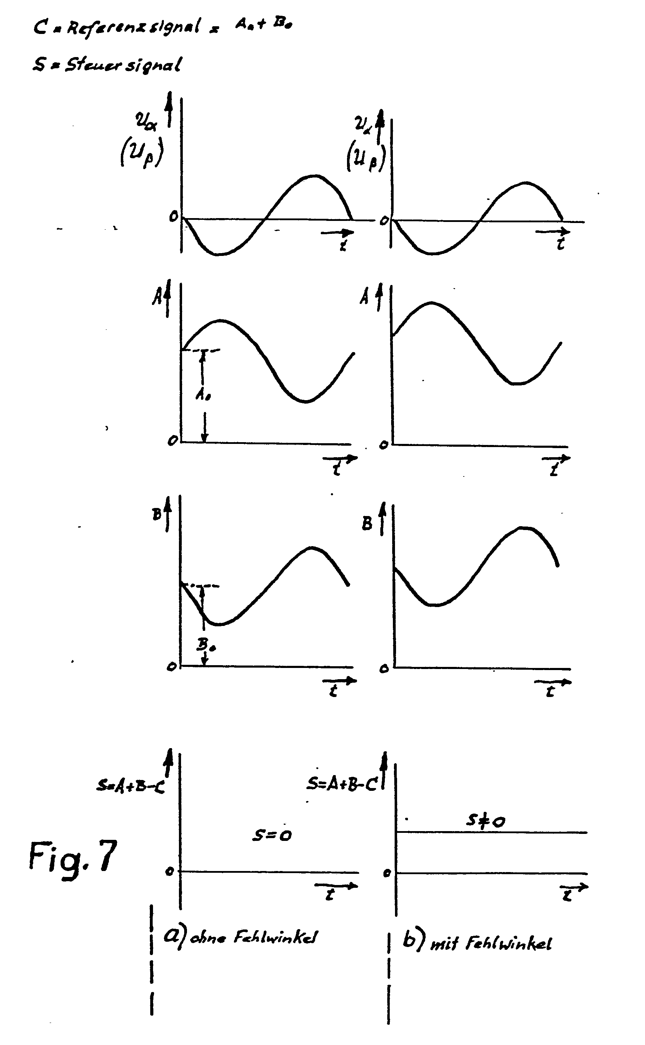

In Figur 7 ist graphisch dargestellt, wie das Kontrollsignal $U_\alpha$ bzw. $U_\beta$ in Abhängigkeit von der Zeit t über eine Periode verläuft und darunter der entsprechende zeitliche Verlauf der Detektionssignale A und B (Detektoren 16 und 18 in Figur 4). Gemäss Figur 8 werden die Detektionssignale über den Widerstand $R_1$ bzw. $R_2$ am (+)-Eingang des Differenzverstärkers addiert sowie anschliessend in demselben von einer Referenzspannung C substrahiert. Bei richtiger Lage der Hilfslichtfleckendetektoren A ($\triangleq 13$) und B($\triangleq 15$) zur Spur und mit $C = A_0 + B_0$ ist das Steuersignal $S = 0$ (Figur 7a). Eine Lageänderung eines der Spiegelabschnitte bewirkt eine Verschiebung der Signale der Detektoren jeweils in positive oder negative Richtung. Die Steuerspannung S ist dann nicht mehr null (Figur 7b). Das Steuersignal enthält keine Komponenten des Radialfehlersignals, da die Summe der radialen Anteile der erfassten Lichtintensität durch die Detektoren bei einer Spurverschiebung in radialer Richtung weg von den Hilfslichtflecken null ist. Das Summensignal kann demnach hinsichtlich Betrag und Richtung als Steuersignal S für die Spiegelabschnitt-Steureinrichtung mittels der genannten Wandler verwendet werden.

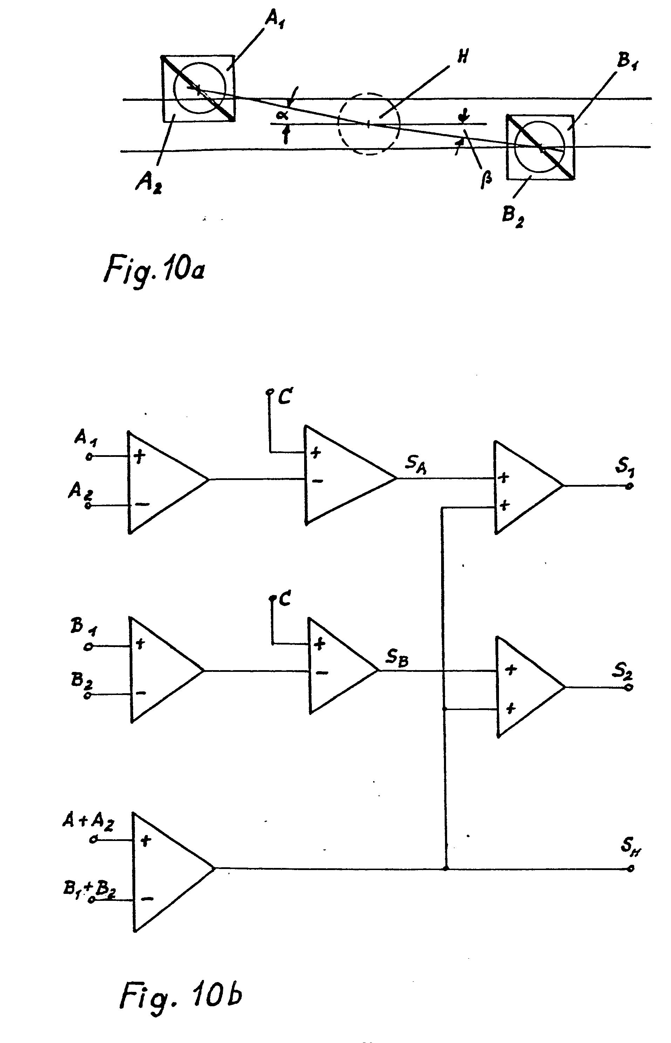

In Figur 9 zeigt ein Blockschaltbild eine Zusatzeinrichtung. Sie erlaubt, im voraus bekannte Winkelabweichungen der Hilfslichtflecken zu berücksichtigen, indem dem üblichen Digital-Analog-Wandler, der das Steuersignal für die Antriebs-Wandler abgibt, ein Festwertspeicher (ROM) vorgeschaltet ist. Dieser ist über seine Eingänge mit Grössen X belegt, die die ROM-Adressen sind, welche sich aus der Berechnung der jeweiligen Lage der Lichtflecke auf der Informationsplatte ergeben.

Im voraus bekannte Winkelabweichungen liegen z.B. dann vor, wenn sich eine Abhängigkeit des Tangentenfehlwinkels vom Abtastradius aufgrund der geometrischen Konstruktionsverhältnisse ergibt und die sowohl bei normalem Abtasten wie auch bei der Betriebsart «Suchlauf» aus der «Sprungweite» z.B. in Form von zu überspringenden Spuren jeweils errechnet wird, wobei die Zahl der zu überspringenden Spuren unter Berücksichtigung der bereits abgetasteten Spuren, bestehend aus beispielsweise acht Einzelbits, als Adresse für das ROM verwendet werden. Bei den bereits abgetasteten oder absolvierten Spuren handelt es sich um die Anzahl von Spuren, die vom Anfang des Spurenbereichs der Platte an bis zum momentanen Abtastpunkt in radialer Richtung bestimmt werden. Die Bestimmung dieser Zahl wird bei derzeit bekannten Abspielgeräten aus der kumulierten Zeit errechnet und liegt damit bereits vor.

Der Vorteil dieser Zusatzeinrichtung besteht in der Vermeidung von Fehlabtastungen. Es könnte ohne Steuerung der im voraus bekannten Winkelabweichungen bei extrem grossen Tangentenfehlwinkeln eine unerwünschte «Einrastung» des radialen Servokreises über die beiden Hilfslichtflekken auf die dem Hauptlichtfleck benachbarten Spuren erfolgen. Dieser Störfall kann hiermit eindeutig vermieden werden.

In Figur 9 ist noch zu erwähnen, dass für jeden der beiden Teilspiegel für die Hilfslichtflecken eine solche Zusatzeinrichtung notwendig ist, wenn die im voraus bekannten Winkelabweichungen für die beiden Hilfslichtflecke unterschiedlich sind.

Die in Figur 10 dargestellte Blockschaltung geht von der bekannten Aufteilung der Detektoren für die Hilfslichtflecken 13 und 15 aus, die Detektionssignale $A_1$, $A_2$, $B_1$, $B_2$ (siehe Fig. 10a) abgeben, je nach der sie beaufschlagenden Lichtintensität. Die Signale $A_1$, $A_2$, $B_1$, $B_2$ sowie die Summen $A_1 + A_2$ und $B_1 + B_2$ liegen an den Eingängen der Eingangsdifferenzverstärker. Die Steuersignale für die Spiegelabschnitte für die Hilfslichtflecken 13 und 15 sind $S_1$ und $S_2$, die durch Differenzbildung mit dem Referenzsignal C und Addition der Differenz von $A_1 + A_2$ und $B_1 + B_2$ entstehen. Die letztere Differenz bildet in bekannter Weise das Steuersignal $S_H$ für den Antrieb des Wandlers für den Hauptlichtfleck 14.

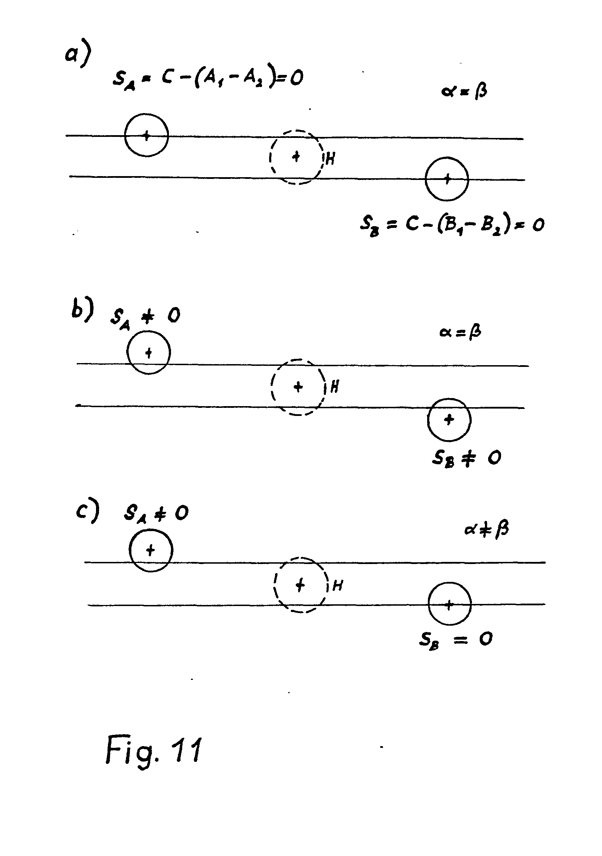

Es ergeben sich (s. Figur 11a, b, c) für die Tangentenfehlwinkel $\alpha$ und $\beta$ und die resultierenden Steuersignale folgende Bedingungen:

1. Wenn $\sphericalangle\alpha = \sphericalangle\beta$ und $S_A = S_B = 0 \rightarrow$ alle drei Wandler werden mit dem Steuersignal $S_H$ angetrieben. Dabei ist $S_A = C - (A_1 - A_2)$ und $S_B = C - (B_1 - B_2)$.

2a. Wenn $\sphericalangle\alpha = \sphericalangle\beta$ und $S_A = S_B \neq 0$, werden die Steuersignale für die die Spiegelabschnitte für die Hilfslichtflecke 13 und 15 gebildet aus dem Steuersignal $S_H + S_A$ und $S_H + S_B$.

2b. Wenn $\sphericalangle\alpha \neq \sphericalangle\beta$, und $S_A \neq S_B$ ergeben sich ebenfalls die Steuersignale aus $S_H + S_B$ bzw. $S_H + S_A$.

Anschliessend muss erwähnt werden, dass der Fall eintreten kann, dass es sinnvoll ist, zu den Ausgängen der Blockschaltung der Figur 10 sowohl ein Kontrollsignal von 10 kHz als auch die Speicherausgangssignale der Figur 9 hinzuzufügen.

Selbstverständlich können die Teilspiegel auch voll spiegelnd ausgeführt sein, wenn dafür Sorge getragen wird, dass ein vorgeschalteter, teildurchlässiger Spiegel so angeordnet ist, die reflektierten Strahlenbündel hier zu den Detektoren gelenkt werden.

## Patentansprüche

1. Radial wirkendes Spurfolgesystem mit einem optischen Abtaster für ein Audio- Video-Plattenwiedergabegerät, das mittels einer Lichtquelle, eines drehbaren Phasenrasters, einer lageregelbaren Reflexionsspiegelanordnung und optischen Lichtbündelungsmitteln drei im wesentlichen auf einer Linie liegende Lichtflecken erzeugt, die zur Tangente an der Spurabtaststelle einstellbar sind, wobei der mittlere Lichtfleck oder Hauptlichtfleck nach Reflexion gemäss der Spurinformation mittels eines Detektionsmittels und anschliessender entsprechender elektronischer Verarbeitung das Nutzsignal und gegebenenfalls das Fokusnachsteuersignal liefert, während die beiden reflektierten Bündel der Lichtflecken (Hilfslichtflecken), die in etwa in Spurrichtung in gleichem Abstand zum Hauptlichtfleck radial entgegengesetzt zueinander um gleiche Beträge versetzt auftreffen, getrennten Detektionsmitteln zugeleitet werden, die Steuer- oder Regelsignale für das radiale Spurfolgesystem liefern, dadurch gekennzeichnet, dass der Reflexionsspiegel (7) eben und dreiteilig ausgebildet ist, indem zumindest die der Reflexion der Strahlenbündel der Hilfslichtflecken (13, 15) dienenden äusseren Teile (7a, 7c) kippbar oder verschiebbar sind gegebenenfalls aber auch der mittlere, der der Reflexion des Strahlenbündels des Hauptlichtflecks (14) dienende Teilspiegel (7b), und von getrennten, einzeln aktivierbaren elektromechanischen Wandlern (25, 26, 28 resp. 35, 36, 37) unabhängig voneinander antreibbar sind, so dass sowohl nur jeweils ein äusserer Teilspiegel (7a oder 7c) wie auch beide gleichzeitig gleichgerichtet oder entgegengesetzt betätigt werden können und somit der Winkel variiert wird, der gebildet wird aus der Verbindungslinie des Mittelpunktes des jeweiligen Hilfslichtflecks (13 oder 15) zum Mittelpunkt des Hauptlichtflecks (14) und der Tangente an der optimalen Spurabtaststelle des Hauptlichtflecks (14).

2. Radial wirkendes Spurfolgesystem gemäss Anspruch 1, dadurch gekennzeichnet, dass die Wandler (25, 28 bzw. 35, 37) der beiden äusseren Spiegelteile (7a, 7c) von einem Kontrollspiegel mit einer Frequenz von erheblich mehr als 600 Hz erregt werden, wodurch die beiden Hilfslichtflecken (A = 13, B = 15) um etwa 0,05 µm in überwiegend radialer Richtung, aber entgegengesetztem Dreh-Sinn zueinander durch die entsprechende Aussteuerung der beiden Wandler (25, 28 bzw. 35, 37) schwingen.

3. Radial wirkendes Spurfolgesystem gemäss den voranstehenden Ansprüchen, dadurch gekennzeichnet, dass die der Spurfolgeregelung zugeordneten Hilfslichtflecken (A = 13, B = 15) mit Detektionselementen (16, 18) zusammenarbeiten, dass die vom Detektionselement (16) erzeugten Signale mit elektronischen Mitteln zu dem Signal des Detektionselements (18) addiert werden, so dass sich bei optimaler Lage der beiden Hilfslichtflecken (A = 13, B = 15) zu der abzutastenden Spur ein Steuersignal S unter Einbeziehung eines Referenzsignals C von S = 0 ergibt, während eine Unsymmetrie im Regelkreis ein Steuersignal $S \neq 0$ ergibt, wobei

a) die von den beiden Detektionselementen erzeugten Signale A bzw. B addiert werden,

b) das Steuersignal $S = A + B - C$, wobei $C = A_0 + B_0$ und $A_0$ und $B_0$ den Soll-Lagen der Hilfslichtflecke entsprechen, gebildet wird,

c) das Steuersignal S zusammen mit dem Kontrollsignal die Auslenkung der äusseren Spiegelteile 7a und 7c steuert.

4. Radial wirkendes Spurfolgesystem nach einem der Ansprüche 1 bis 3, dadurch gekennzeichnet, dass abtastfehlertypische und/oder proportionale Winkelabweichungen bei bestimmten Abtastradien für ein bestimmtes Plattenwiedergabegerät in einem Festwertspeicher ROM abgespeichert sind und dass dieses ROM einem üblichen Digital-Analog-Wandler vorgeschaltet ist, dessen Ausgangssignal die Steuergrösse für die steuerbaren Spiegelteile (7a, 7c) ist, wobei sowohl für den normalen Abtastvorgang als auch für den Suchlaufbetrieb aus der als Information auf der Platte vorliegenden kumulierten Zeit in bekannter Weise Signalfolgen errechnet und beispielsweise aus 8 Einzelbits bestehenden Blöcke als Adresse für das ROM verwendet werden.

## Claims

1. A radially-acting track-following system incorporating an optical scanner for an audio or video disk reproduction unit, which produces three luminous spots lying essentially on a line, by means of a light source, a rotatable phase grating, a reflecting-mirror assembly with positional control, and an optical beam-focussing means, whereby the luminous spots can be adjusted relative to the tangent at the track scanning point, so that the centre luminous spot or the main luminous spot, after it is reflected from the information track, delivers the useful signal and possibly the focus spot follow-up signal using a detection means followed by corresponding electronic processing, while the two beams are reflected from the luminous spots (secondary luminous spots), which impinge along the track at equal distances to the main luminous spot but mutually offset by equal amounts in the radial direction, are guided to separate detecting means which produce control signals for the radial track-following system, characterized in that the reflecting mirror (7) is of flat an tripartite, design, whereby at least the outer portions (7a, 7c) which serve to reflect the light beams of the secondary luminous spots (13, 15), may be shifted or tilted, possibly also with the central sub-mirror (7b), the latter serving to reflect the light beam of the main luminous spot (14), and can be actuated independent of each other by separate individually-activated electro-mechanical transducers (25, 26, 28 or 35, 36, 37), whereby only the one outer sub-mirror (7a or 7c) may be actuated, or, both may be actuated, simultaneously in unison or in opposition, in this way varying the angle which is formed by the line connecting the centre point of the relevant secondary luminous spot (13 or 15) to the centre point of the main luminous spot (14), with the tangent located at the optimal track scanning position of the main luminous spot (14).

2. A radially-acting track-following system as claimed in claim 1, characterized in that the transducers (25, 28 or 35, 37) of the two outer mirror portions (7a, 7c) are excited by a control signal operating at a frequency which is much greater than 600 Hz, whereby the two secondary luminous spots (A = 13, B = 15) oscillate by about 0.05 micron in essentially a radial direction, but in counter rotation, by means of the corresponding driving of the two transducers (25, 28 or 35, 37).

3. A radially-acting track-following system as claimed in the above claims, characterized in that the secondary luminous spots (A = 13, B = 15) which are assigned to the track-following control, work with detection means (16, 18), that the signals generated by the detection means (16) are added by electronic means to the signal of the detector (18), whereby an optimal disposition of both secondary luminous spots (A = 13, B = 15) to the track to be scanned produces a control signal S including a reference signal C of S=0, whilst an asymmetry in the control circuit generates a control signal S not equal to 0, so that,

a) the signals A, B generated by both detection means are added,

b) there is formed the control signal $S = A + B - C$, where $C = A_0 + B_0$ and $A_0$ and $B_0$ correspond to the desired positioning of the secondary luminous spots,

c) the control signal S with the check signal controls the deflection of the outer mirror portions 7a and 7c.

4. A radially-acting track-following system as claimed in any of claims 1 to 3, characterized in that angular deviations in respect of a specific type of disk reproduction unit, representing typical scanning errors and/or proportional deviations, are stored in a read-only-memory (ROM) relating to specific scanned radii, and that this ROM is connectet in series to a standard digital-analog converter whose output signal is the control variable used for controlling the mirror portions (7a, 7c), whereby binary signal sequences are calculated in known manner for normal operation and also for search mode from the cumulative time which is on the disk as data, these for example being used as the ROM address in the form of blocks comprising 8 bits.

## Revendications

1. Système de suivi de piste, qui agit radialement et comporte un dispositif d'exploration optique pour un appareil de lecture de disques audio-vidéo, qui produit, à l'aide d'une source de lumière, d'un déphaseur rotatif, d'un dispositif à miroir réfléchissant, dont la position est réglable, et de moyens optiques de focalisation de la lumière, trois spots de lumière situés sensiblement sur une droite et réglables par rapport à la tangente à la zone d'exploration de la piste, auquel cas le spot de lumière médian fournit, après réflexion, conformément à l'information de la piste, et par l'intermédiaire d'un dispositif de détection et d'un traitement électronique correspondant ultérieur, le signal utile et éventuellement le signal d'asservissement du foyer, tandis que les deux faisceaux féfléchis des spots de lumière (spots de lumière auxiliaires), qui apparaissent approximativement dans la direction de la piste à la même distance du spot de lumière principal, en étant décalés radialement l'un par rapport à l'autre, sur des distances identiques, fournissent les signaux de commande ou de régulation pour le système radial de suivi de piste, caractérisé en ce que le miroir réfléchissant (7) est plat et formé de trois éléments, en ce qu'au moins les éléments extérieurs (7a, 7c), qui sont utilisés pour la réflexion des faisceaux de rayonnement des spots de lumière auxiliaires (13, 15), peuvent basculer ou être déplacés, de même qu'éventuellement également le miroir partiel médian (7b), qui sert à réfléchir le faisceau de rayonnement du spot de lumière principal (14), et que ces éléments peuvent être commandés indépendamment les uns des autres par des transducteurs électromécaniques séparés (25, 26, 28 ou 35, 36, 37), pouvant être activés individuellement, de telle sorte que l'on peut actionner aussi bien seulement l'un des miroirs partiels extérieurs (7a ou 7c), que ces deux miroirs simultanément dans le même sens ou dans des sens opposés et que l'on peut par conséquent modifier l'angle qui est formé par la droite reliant le centre du spot de lumière auxiliaire respectif (13 ou 15) au centre du spot de lumière principal (14), et la tangente à la zone optimale d'exploration de la piste, du spot de lumière principal (14).

2. Système de suivi de piste, agissant radialement, selon la revendication 1, caractérisé en ce que les transducteurs (25, 28 ou 35, 37) des deux éléments de miroir extérieurs (7a, 7c) sont excités par un signal de contrôle possédant une fréquence très supérieure à 600 Hz, ce qui a pour effet que les deux spots de lumière auxiliaires (A = 13, A = 15) oscillent sur une distance d'environ 0,05 µm dans une direction essentiellement radiale, mais avec des sens de rotation réciproquement opposés, sous l'effet de la commande correspondante des deux transducteurs (25, 28 ou 37, 35).

3. Système de suivi de piste à action radiale, selon les revendications précédentes, caractérisé en ce que les spots de lumière auxiliaire (A = 13, B = 15), associés au système de régulation de suivi de piste, coopèrent avec des éléments détecteurs (16, 18), que les signaux produits par l'élément détecteur (16) sont ajoutés au signal de l'élément détecteur (18) par des moyens électroniques, de sorte que, lorsque les deux spots de lumière auxiliaires (A = 13, B = 15) sont dans une position optimale par rapport à la piste à explorer, on obtient de l'insertion du signal de référence C un signal de commande S correspondant à S = 0, tandis qu'une dissymétrie dans le circuit de régulation fait apparaître un signal de commande S ≠ 0, auquel cas:

a) les signaux A et B produits par les deux éléments détecteurs sont additionnés,

b) le signal de commande $S = A + B - C$ est formé, avec $C = A_0 + B_0$, et $A_0$ et $B_0$ correspondant aux conditions de consigne des spots de lumière auxiliaires,

c) le signal de commande S commande, de concert avec le signal de contrôle, la déviation des éléments extérieurs de miroir 7a et 7c.

4. Système de suivi de piste à action radiale, selon l'une des revendications 1 à 3, caractérisé en ce que des écarts angulaires typiques d'erreurs d'exploration et/ou proportionnels sont mémorisés, pour des rayons déterminés d'exploration et pour un appareil déterminé de lecture de disques, dans une mémoire morte ROM et que cette mémoire ROM est branchée en amont d'un convertisseur numérique/analogique usuel, dont le signal de sortie constitue la grandeur de commande pour les éléments de miroir commandables (7a, 7c), auquel cas des suites de signaux binaires sont calculées de façon connue aussi bien pour l'opération normale d'exploration que pour le fonctionnement de recherche, à partir du temps cumulé présent en tant qu'information sur le disque, et qu'on utilise par exemple des blocs constitués de 8 bits individuels en tant qu'adresse pour la mémoire ROM.

Fig. 1

Stand der Technik

Spurrichtung

Fig. 2

Spurrichtung

Fig. 3

Fig. 4

**Fig. 5**

31

32

33

37

36

35

34

*Fig. 6*

$C$ = Referenzsignal = $A_o + B_o$

$S$ = Steuersignal

Fig. 7

a) ohne Fehlwinkel    b) mit Fehlwinkel

$S = A + B - C$

Fig. 8

Fig. 9

Fig. 10a

Fig. 10b

a)

$$S_A = C - (A_1 - A_2) = 0$$

$$\alpha \neq \beta$$

$$S_B = C - (B_1 - B_2) \neq 0$$

b) $S_A \neq 0$

$$\alpha = \beta$$

$$S_B \neq 0$$

c) $S_A \neq 0$

$$\alpha \neq \beta$$

$$S_B = 0$$

Fig. 11